(19) Europäisches Patentamt
European Patent Office
Office européen des brevets

(11) **EP 4 119 329 A1**

(12) **EUROPEAN PATENT APPLICATION**

(43) Date of publication:
**18.01.2023 Bulletin 2023/03**

(21) Application number: **21305972.8**

(22) Date of filing: **12.07.2021**

(51) International Patent Classification (IPC):
**B29C 64/124** (2017.01)     **B29C 64/277** (2017.01)
**B33Y 10/00** (2015.01)      **B33Y 30/00** (2015.01)
**B29D 11/00** (2006.01)

(52) Cooperative Patent Classification (CPC):
**B33Y 10/00; B29C 64/124; B29C 64/277;
B29D 11/00009; B29D 11/00432; B29D 11/00961;
B33Y 30/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ESSILOR INTERNATIONAL
94220 Charenton-Le-Pont (FR)**

(72) Inventors:
• **LECOMPERE, Maxime
94700 MAISONS -ALFORT (FR)**
• **LEITE, Pierre
91650 BREUILLET (FR)**
• **PADIOU, Jean-Marc
94500 CHAMPIGNY SUR MARNE (FR)**

(74) Representative: **Santarelli
49, avenue des Champs-Elysées
75008 Paris (FR)**

(54) **METHOD FOR ADDITIVELY MANUFACTURING AN OPHTHALMIC DEVICE AND MANUFACTURING SYSTEM CONFIGURED TO CARRY OUT SUCH A METHOD**

(57)    The invention provides a method for additively manufacturing an ophthalmic device, comprising the step of additively manufacturing a plurality of layers of a predetermined material (12) in order to obtain the ophthalmic device, each layer being manufactured by projecting and polymerizing at least one image on a surface (15) of a volume of the predetermined material (12); wherein, for at least one layer (21), the method comprises a step of forming a first part (22) of said layer (21) with a first image (17) having a first contrast level and a step of forming a second part (23) of said layer (21), at least partially distinct from said first part (22), with a second image (18) having a second contrast level, said first contrast level being higher than a predetermined sharp threshold and said second contrast level being lower than a predetermined blurring threshold.

EP 4 119 329 A1

Fig. 1

**Description**

FIELD OF THE INVENTION

The invention relates to a method for additively manufacturing an ophthalmic device and a manufacturing system configured to carry out such a method for additively manufacturing such an ophthalmic device.

BACKGROUND ART

International application WO2018235209A1 discloses a method for additively manufacturing an optical article layer by layer from a light-curable resin, using a micromirror device, e.g. a DMD (Digital Micromirror Device), for generating a desired shape light flux for irradiating the light-curable resin. The micromirror device has a plurality of micromirrors arranged in two-dimensional repetition structure. In the process of using DMD for light-curing the resin, in a projected region of the light-curable resin, an intensity of the projected light in a portion corresponding to an area of the micromirror itself is different from that in a portion corresponding to an area between adjacent micromirrors.
Due to this, there is a subtle difference in a state of the light-curable resin between these two portions, and a periodical refractive index variation corresponding to two-dimensional array of the micromirrors is generated in the cured layer of the light-curable resin. This results in the manufactured optical article to induce stereoscopic diffraction effect on the axis orthogonal to the printing xy-plane. For reducing the diffraction effect that comes from the repetition structure, the method comprises an irradiation variation process which is conducted by at least one of: passing the output light flux through a diffusion element; between two layer curing steps, moving the stage on which the optical article is formed in a direction which is perpendicular to the direction along which the flux propagates; deviating a condensing position of the output light flux from the position at which the cured layer is to be formed; varying a magnification of the projection optical system; and, between two layer curing steps, moving the stage by a randomized distance in the direction along which the flux propagates.

SUMMARY OF THE INVENTION

The invention is directed to a method for additively manufacturing an ophthalmic device with enhanced optical performance.
The invention accordingly provides a method for additively manufacturing an ophthalmic device, comprising the step of additively manufacturing a plurality of layers of a predetermined material in order to obtain the ophthalmic device, each layer being manufactured by projecting and polymerizing at least one image on a surface of a volume of the predetermined material; wherein, for at least one layer, the method comprises a step of forming a first part of said layer with a first image having a first contrast level and a step of forming a second part of said layer, at least partially distinct from said first part, with a second image having a second contrast level, said first contrast level being higher than a predetermined sharp threshold and said second contrast level being lower than a predetermined blurring threshold.
In the method according to the invention, the first image having the first contrast level higher than the predetermined sharp threshold produces a first part of the layer having a high shape precision; while the second image having the second contrast level lower than the predetermined blurring threshold produces a second part of the same layer having a slight variation of refractive index.
Indeed, the higher the contrast of the image used for polymerizing the predetermined material, the higher the shaping precision; while the lower the contrast of the image used for polymerizing the predetermined material, the lower the refractive index variability of the resulting part and thus the lower the diffraction effect.
Therefore, in the method according to the invention, the predetermined sharp threshold corresponds to a contrast level above which the shape precision is preferred and the diffraction effect is admitted, while the predetermined blurring threshold corresponds to a contrast level below which the diffraction effect is highly reduced and the shape imprecision is admitted.
Due to the fact that using a high contrast image results in part having a high index variability and thus a diffraction effect, while using a low contrast image results in a poor shaping precision, the method according to the invention allows forming layers of an ophthalmic device having, in the same layer, at least a diffractive precisely shaped part and at least a non-diffractive roughly shaped part.
Advantageous and convenient features of the method are described below.
The step of forming the first part may be used for forming at least partially a skin of the ophthalmic device and the step of forming the second part may be used for forming at least partially a core of the ophthalmic device, said core being enveloped by the skin.
The diffractive precisely shaped parts may thus be used for forming parts of the ophthalmic device that require to be precisely shaped, including the skin which can be formed by front and back optical faces of the ophthalmic device that give a predetermined optical function thereof, and also by its peripheral edge that needs to tightly fit with a frame for proper mounting of the ophthalmic device therein; while the non-diffractive poorly shaped part may be used for forming bulk parts of the ophthalmic device, including the core material of the ophthalmic device.

Said first image and said second image may overlap, so that said first part and said second part have a shared portion.

The method may further include a step of forming at least a third part of said layer which is at least partially distinct from said first part and from said second part; said third part being formed with a third image having a third contrast level which is lower than said predetermined sharp threshold and higher than said predetermined blurring threshold.

Such a third image has a third contrast level which is an intermediate contrast level between the first and the second contrast levels. In other words, the third part has a lower shape precision and a lower diffraction effect than the first part, and a higher shape precision and a higher diffraction effect than the second part.

Said third part may be used for forming at least partially at least one of a skin and a core enveloped by the skin of the ophthalmic device.

Said third image may partially overlap at least one of said first image and said second image, so that said third part has a shared portion with at least one of said first part and said second part.

Said images may be projected sequentially.

Said images may be projected simultaneously. For instance, each image may be projected by a respective projecting and polymerizing unit or by a single projecting and polymerizing unit.

The method may further comprise a step of forming at least one of said images by using at least one digital micromirror device of at least one projecting and polymerizing unit.

The method may further comprise a step of determining said predetermined sharp threshold and said predetermined blurring threshold depending on the composition and/or the intrinsic parameters of said predetermined material.

Said second contrast level may be obtained by defocusing or by diffusing said second image.

The invention also provides a manufacturing system configured to carry out a method for additively manufacturing an ophthalmic device layer by layer, comprising a unit for projecting and polymerizing at least one image on a surface of a volume of a predetermined material for forming each layer of the ophthalmic device; said projecting and polymerizing unit being configured to generate a first image having a first contrast level which is higher than a predetermined sharp threshold and to project said first image on a surface of said volume of said predetermined material to form a first part of the layer, and to generate a second image having a second contrast level which is lower than a predetermined blurring threshold and to project said second image on a surface of said volume of said predetermined material to form a second part of the layer which is at least partially distinct from the first part.

Advantageous and convenient features of the manufacturing system are described below.

Said projecting and polymerizing unit may be configured to generate a third image having a third contrast level which is lower than said predetermined sharp threshold and higher than said predetermined blurring threshold, and to project said third image on a surface of said volume of said predetermined material to form a third part of the layer which is at least partially distinct from said first part and from said second part.

Said projecting and polymerizing unit may be configured to give said contrast levels which are lower than said predetermined sharp by defocusing said second image.

Said projecting and polymerizing unit may be configured to give said contrast levels which are lower than said predetermined sharp to said second image by diffusing said second image.

BRIEF DESCRIPTION OF THE DRAWINGS

The description of the invention now continues with a detailed description of advantageous embodiments given hereinafter by way of nonlimiting example and with reference to the appended drawings.

Figure 1 is a schematic view of a manufacturing system configured to carry out the method for additively manufacturing an ophthalmic device according to the invention.

Figure 2 illustrates a first image having a first contrast level that the manufacturing system of Figure 1 is configured to generate and project for forming a first part of a layer of the ophthalmic device.

Figure 3 illustrates a second image having a second contrast level that the manufacturing system of Figure 1 is configured to generate and project for forming a second part of the layer of the ophthalmic device.

Figure 4 illustrates the layer of the ophthalmic device manufactured by projecting and polymerizing the first image of Figure 2 and the second image of Figure 3 on a surface of a volume of predetermined material for respectively forming the first part and the second part of the layer.

Figure 5 is a graph that schematically shows the lighting energy provided by the first image and by the second image along a section of the layer identified by V-V on Figure 4.

Figure 6 illustrates a variant of the steps of projecting and polymerizing the first image and the second image.

Figure 7 is similar to Figure 6 but according to a variant of the method in which a step of forming a third part of the layer of the ophthalmic device thanks to a third image, the third part having a third contrast level being between the first contrast level and the second contrast level.

Figures 8 to 15 illustrate a plurality of manufacturing systems each configured for generating at least the first image and the second image.

Figure 16 illustrates a diffusing element used for giving a respective contrast level at least to the first and/or the second image.

## DETAILED DESCRIPTION OF EXAMPLE EMBODIMENTS

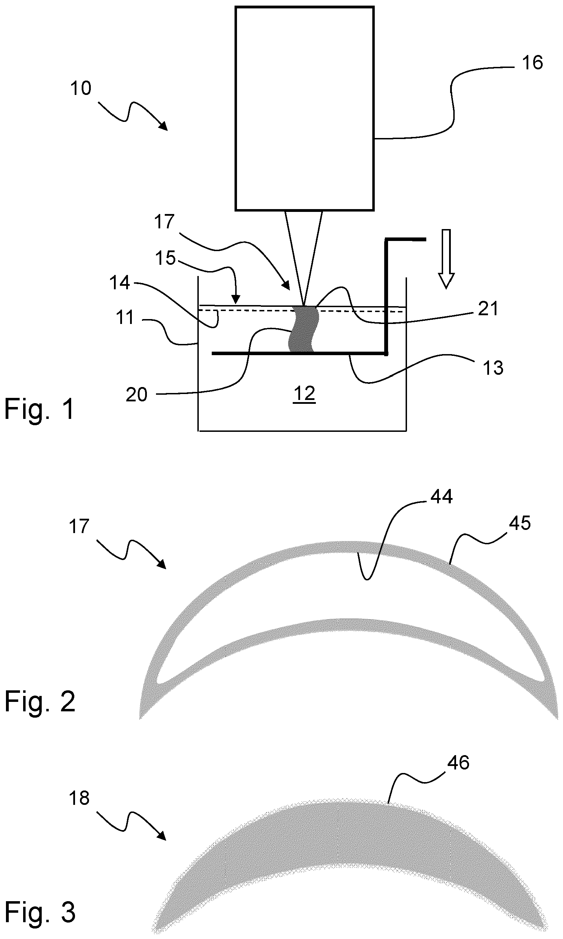

Figure 1 is a schematic view of a manufacturing system 10 configured to carry out a method for additively manufacturing an ophthalmic device 20 layer by layer.

The manufacturing system 10 comprises a tank 11 filled with a volume of predetermined material 12 in a liquid state and a building platform 13 on which is additively manufactured the ophthalmic device 20.

The manufacturing system 10 comprises a unit 16 for projecting and polymerizing at least one image on a surface 15 of the volume of the predetermined material 12 for forming each layer of the ophthalmic device 20.

Each layer thus results from the polymerization of the volume of predetermined material 12 in a portion extending from the zone of the surface 15 which is irradiated by the at least one image up to a predetermined depth 14 corresponding to the thickness of the layer.

After each layer has been completed, the building platform 13 is moved away from the surface 15 by a predetermined distance for refilling the space between the surface 15 and the completed layer with the predetermined material 12 in a liquid state.

The method for additively manufacturing a layer 21 of the ophthalmic device 20 thanks to the manufacturing system 10 is describe in reference to Figures 2 to 5.

More specifically, thanks to the projecting and polymerizing unit 16, the method comprises the step of generating a first image 17 (Figure 2) having a first contrast level which is higher than a predetermined sharp threshold and the step of projecting the first image 17 on the surface 15 of the volume of predetermined material 12 to form a first part 22 of the layer 21.

The method further comprises the step of generating a second image 18 (Figure 3) having a second contrast level which is lower than a predetermined blurring threshold and the step of projecting the second image 18 on the surface 15 of the volume of predetermined material 12 to form a second part 23 of the layer 21 which is at least partially distinct from the first part 22.

The sharp threshold corresponds to a contrast level which is higher than the contrast level to which corresponds the blurring threshold. The first contrast level of the first image 17 is thus higher than the second contrast level of the second image 18.

The first image 17 is here loop-shaped (Figure 2) and has an inner edge 44 delimiting the inside of the loop and an outer edge 45 opposite the inner edge 44.

The second image 18 (Figure 3) is here solid-shaped and has an outer edge 46.

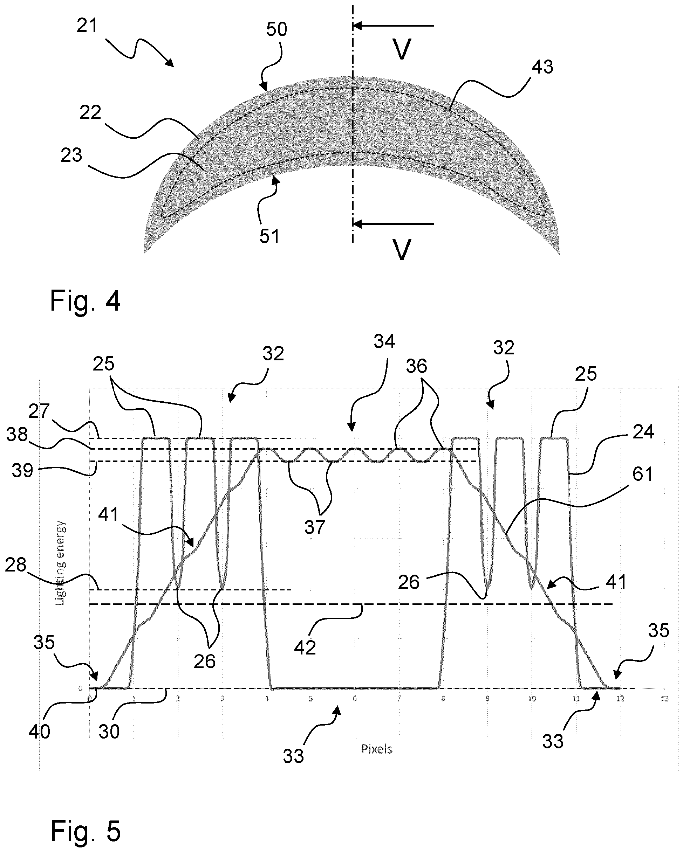

Figure 4 illustrates the layer 21 formed with the first image 17 and the second image 18.

On Figure 4, the broken line 43 identifies the boundary between the first part 22 and the portion of the second part 23 which is distinct from the first part 22. In other words, the portion of the layer 21 which is inside the region delimited by the broken line 43 is exclusively formed by the second image 18.

The first part 22 is here used for forming a skin of the ophthalmic device 20.

As explained in more details below, the first part 22 and the second part 23 of the layer 21 here have a shared portion and such a shared portion is here also used for forming the skin of the ophthalmic device 20.

The portion of the second part 23 which is distinct from the first part 22 is here used for forming a core of the ophthalmic device 20, the core being enveloped by the skin.

The first part 22 here has a peripheral side which includes a convex portion 50 and a concave portion 51 which are part, in the ophthalmic device 20, of a front convex optical face and a back concave optical face, the front and back optical faces giving a predetermined optical function to the ophthalmic device 20.

It should be noted that the ophthalmic device 20 is here additively manufactured such that its layers, including the layer 21, each have an orientation that is transversal, here perpendicular, to the general orientation of the front and back optical faces of the ophthalmic lens. In a non-illustrated variant, the layers have a different orientation, for instance an orientation that is parallel to the general orientation of the front and back optical faces of the ophthalmic lens, or an orientation that is angularly between the parallel and perpendicular orientations.

Figure 5 is a graph that schematically shows the lighting energy provided by the first image 17 and by the second image 18 along a section of the layer 21 identified by V-V on Figure 4.

The lighting energy is here defined as a surface dosage of light energy that may be expressed in mJ/mm$^2$ or, if it is considered per unit of time, in mW/cm$^2$, for instance. The lighting energy is measured at the surface 15 of the volume of predetermined material.

The lighting energy provided by the first image 17 is represented by curve 24 and the lighting energy provided by the second image 18 is represented by curve 61.

Curve 24 has high region 32 corresponding to where the first image 17 is projected and low regions 33 corresponding to where the first image 17 is not projected.

The high region 32 are formed by a succession of plateaus 25 and valleys 26 which are respectively the effect of the micromirrors of the unit 16 and of the space between these micromirrors.

The plateaus 25 define a high energy level 27 which is the average maximal energy received by the areas of the layer 21 where the first image 17 is projected.

The valleys 26 define a low energy level 28 which is the average minimal energy received by the areas of the layer 21 where the first image 17 is projected.

The low regions 33 define a minimum energy level 30 which is the average residual energy received by the areas of the layer 21 where the first image 17 is not projected, such an average residual energy being here considered to be zero.

Curve 61 has a high region 34 corresponding to where the second image 18 is projected and low regions 35 corresponding to where the second image 18 is not projected.

High region 34 is formed by a succession of plateaus 36 and valleys 37 which are respectively the effect of the micromirrors of the unit 16 and of the space between these micromirrors.

The plateaus 36 define a high energy level 38 which is the average maximal energy received by the areas of the layer 21 where the second image 18 is projected.

The valleys 37 define a low energy level 39 which is the average minimal energy received by the areas of the layer 21 where the second image 18 is projected.

The low regions 35 define a minimum energy level 40 which is the average residual energy received by the areas of the layer 21 where the second image 18 is not projected, such an average residual energy being here considered to be zero.

Curve 61 further has fading regions 41 that are each joining the high region 34 to the low regions 35 and corresponding to the periphery of the second image 18, where the light energy progressively diminishes.

Similar fading regions actually exist also for curve 24 but are here negligible because the contrast level of the first image 17 is much higher than the contrast level of the second image 18.

Another fact illustrating the higher contrast level of the first image 17 with respect to the one of the second image 18 is that the difference of altitude between the plateaus 25 and the valleys 26 of curve 24 is greater than the difference of altitude between the plateaus 36 and the valleys 37 of curve 61.

Taking into account the above, the contrast level of an image projected by the unit 16, for instance the first image 17 or the second image 18, can be defined by the expression:

$$\text{contrast level} = (\text{high energy level} - \text{low energy level}) / (\text{high energy level} - \text{minimum energy level}).$$

As mentioned above in the case of the first image 17 and the second image 18, the minimum energy level is the average residual energy received by the areas of the layer 21 where the image is not projected and can be considered to be zero.

Indeed, this average residual energy is primarily a characteristic of the manufacturing system 10 and is in practice close to zero mW/cm$^2$, for instance 0.12 mW/cm$^2$. The value of this average residual energy is usually given by the manufacturer of the manufacturing system 10.

By considering the average residual energy to be equal to zero, the above expression is simplified as follows:

$$\text{contrast level} = (\text{high energy level} - \text{low energy level}) / (\text{high energy level}).$$

For the first image 17, the contrast level is thus: (level 27 - level 28) / (level 27).

For the second image 18, the contrast level is thus: (level 38 - level 39) / (level 38).

It should be noted that on Figure 5 curves 24 and 61 are drawn very schematically for the sake of readability.

In particular, the distance between the high regions 32 of curve 24 (corresponding to the extension of high region 34 of curve 61) is reduced compared to the distance between the convex portion 50 and the concave portion 51 of the first part 22 on Figure 4. In addition, the size of the pixels on the horizontal axis is very exaggerated with respect to the size of the high, low and fading regions of curves 24 and 61 and the number of pixels forming these high, low and fading regions have been accordingly adjusted, that is to say diminished. Indeed, the number of pixels forming these high, low and fading regions may be in practice far more than only three or four. In addition, the difference of altitude between the plateaus 36 and the valleys 37 of curve 61 is exaggerated with respect to the difference of altitude between the plateaus 25 and the valleys 26 of curve 24, thereby enabling to distinguish between the energy levels 38 and 39 on Figure 5 which in reality may be closer than illustrated.

For instance, level 27 = 59 mW/cm$^2$ and level 28 = 23 mW/cm$^2$, so that the contrast level of the first image 17 may be 61%; and level 38 = 54.6 mW/cm$^2$ and level 39 = 52.7 mW/cm$^2$, so that the contrast level of the second image 18 may be 3%.

As previously mentioned, in the present method for additively manufacturing an ophthalmic device, the first contrast level of the first image 17 is to be higher than a predetermined sharp threshold and the second contrast level of the second image 18 is to be lower than a predetermined blurring threshold.

As explained above, in such method the predetermined sharp threshold corresponds to a contrast level above which the shape precision is preferred and the diffraction effect is admitted, while the predetermined blurring threshold corresponds to a contrast level below which the diffraction effect is highly reduced and the shape imprecision is admitted.

It should be noted that the shape precision can be defined here as the deviation of the printed voxels from their theoretical shape and position, so that the lower the deviation, the higher the shape precision.

It should also be noted that the diffraction effect may be admitted in view of the low thickness of the first part of the ophthalmic device, such as when the first part is used for forming the skin of the ophthalmic device.

Generally speaking, the predetermined sharp threshold and the predetermined blurring threshold may depend on the composition and/or the intrinsic parameters of said predetermined material.

Accordingly, the present additive manufacturing method may comprise a step of determining the predetermined sharp threshold and the predetermined blurring threshold depending on the composition and/or the intrinsic parameters of the predetermined material.

The step of determining the predetermined blurring threshold may include the step of additively manufacturing from the same predetermined material a plurality of test parts that are representative of the ophthalmic device to be manufactured, each part being obtained with a respective and distinct contrast level and then testing each of these parts for determining the contrast level below which the diffractive effect is acceptable (or admissible), that is to say the blurring threshold.

The test parts may be manufactured with a manufacturing system such as the system 10.

Each part may be tested by shadowgraphy, for instance using an arclamp for irradiating the tested part and producing a shadowgraph which may be analyzed with the naked eye. The diffractive effect may be considered acceptable if it is undetectable or barely undetectable with the naked eye, or more generally when it is low enough for ophthalmic application.

Alternately or in addition, each part may be tested by analyzing its transmission characteristic, such as diffraction orders produced by a laser, or transmission in UV spectroscopy.

For instance, it has been determined that for a predetermined material including acrylate and methacrylate monomers, the predetermined blurring threshold is about 3%, thereby obtaining a refractive index variation of about 0.0001.

More generally, it has been determined that for most of the curable predetermined materials, using a second contrast level which is lower than a predetermined blurring threshold of 4%, or preferably 2% leads to a cured material having an acceptable diffractive effect.

The step of determining the sharp threshold may include the step of determining the lowest contrast level for which the shape precision is admissible (that is to say the contrast level below which the shape imprecision would not be admissible) with respect to the value of the optical function to provide to the ophthalmic device and/or with respect to a frame into which the ophthalmic device is to be fitted.

More generally, it has been determined that for most of the curable predetermined materials, using a first contrast level which is higher than a predetermined sharp threshold of 60%, preferably 66%, leads to a shape precision which is admissible.

It can further be seen on Figure 5 that the fading regions 41 of the second image 18 entirely overlap the high region 32 of the first image 17.

The broken line 42 on Figure 5 represents the level of critical energy above which the polymerisation of the predetermined material 12 begins.

Since certain portions of the fading regions 41 of the second image 18 are above the critical energy 42 then the first part 22 and the second part 23 have a shared portion.

It can further be seen on Figure 5 that the high region 34 of the second image 18 does not overlap any region of the first image 17 which is above the critical energy, so that the portion of the second part 23 formed with the high region 34 of the second image 18 (portion of the second part 23 inside the broken line 43 on Figure 4) is distinct from the first part 22.

In a variant, the high region 32 of the first image 17 overlaps the high region 34 of the second image 18.

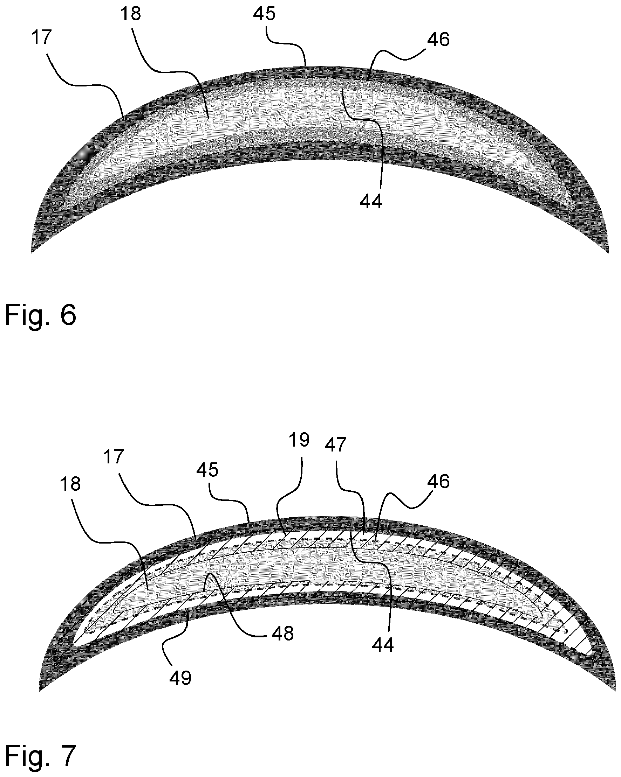

Such a variant is illustrated on Figure 6, on which the first image 17 and the second image 18 are shown as if they were projected together on the surface of predetermined material.

As visible, the outer edge 46 of the second image 18 is between the outer edge 45 and the inner edge 44 of the first image 17. The area where the high region 32 of the first image 17 and the high region 34 of the second image 18 overlap, is delimited by the outer edge 46 and the inner edge 44.

Figure 7 is similar to Figure 6 but according to a variant of the method in which a third image 19 (the hatched area) having a third contrast level is generated and projected thanks to the projecting and polymerizing unit 16, in a step of forming a third part of the layer of the ophthalmic device, which is at least partially distinct from the first part formed with the first image 17 and from the second part formed with the second image 18.

The third image 19 has a third contrast level which is between the first contrast level of the first image 17 and the second contrast level of the second image 18.

More specifically, the third contrast level may be lower than the predetermined sharp threshold and higher than the predetermined blurring threshold.

On Figure 7, it can be seen that the first image 17 and the second image 18 are projected on respective and distinct areas of the surface of predetermined material. In other words, the first image 17 and the second image 18 do not overlap.

Moreover, the outer edge 46 of the second image 18 is at a distance from the inner edge 44 of the first image 17 so that an gap 47 exists between the inner edge 44 and the outer edge 46.

The third image 19 is loop-shaped and has an inner edge 48 delimiting the inside of the loop and an outer edge 49 opposite the inner edge 48.

The third image 19 partially overlaps the first image 17 in an area delimited by the outer edge 49 and the inner edge 44, and partially overlaps the second image 18 in an area delimited by the outer edge 46 and the inner edge 48. Accordingly the third part of the layer has a shared portion with both the first part and the second part of the layer.

In a variant, the third image may overlap only the first image or only the second image.

On Figure 7, the gap 47 is overlapped only by the third image 19, so that the third part of the layer has a portion which is distinct from both the first part and the second part formed respectively by the first image 17 and the second image 18.

The third part may be used for forming at least partially at least one of a skin and a core enveloped by the skin of the ophthalmic device.

The third part may offer a progressive transition in terms of optical properties for the layer from the first part to the second part, and thus for the ophthalmic device from the skin to the core.

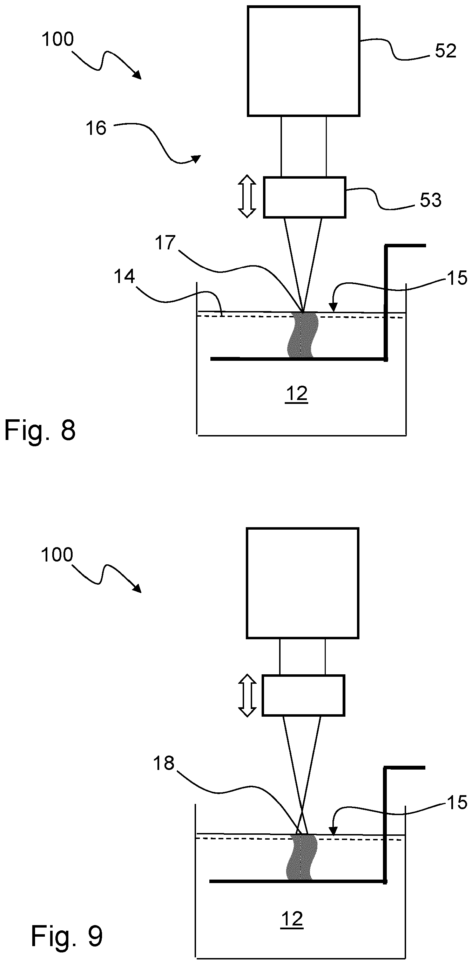

Figures 8 and 9 illustrate the manufacturing system 10, during the steps of generating and projecting the first image 17 and the second image 18 respectively.

For generating the first image 17 and the second image 18, the projecting and polymerizing unit 16 comprises a radiation source and here a digital micromirror device (DMD) 52 configured to receive the light emitted by the radiation source and shape this light into an image, in particular the first image 17 and the second image 18. The DMD 52 has a plurality of micromirrors arranged in two-dimensional repetition structure, each micromirror generating a portion of the image.

The projecting and polymerizing unit 16 is configured to give the contrast levels which are higher than the predetermined sharp threshold by focusing the image which is projected from the DMD, in particular the first image 17.

The projecting and polymerizing unit 16 is configured to give the contrast levels which are lower than the predetermined blurring threshold by defocusing the image which is projected from the DMD, in particular the second image 18.

The DMD 52 generates an image, in particular the second image 18, in a pre-focused state and a movable focusing device 53 that can be displaced along the optical path of the generated image for adjusting its focusing state, and thus its contrast level, at the level of the surface 15 of the predetermined material 12.

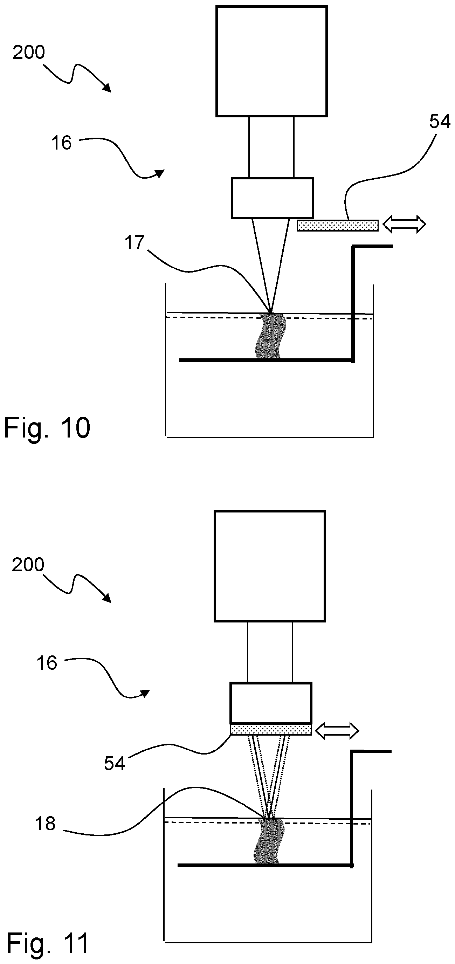

Figures 10 and 11 are similar to Figures 8 and 9, except that the manufacturing system 10 has a projecting and polymerizing unit 16 which further comprises a diffusing element 54.

The projecting and polymerizing unit 16 is configured to place the diffusing element 54 away from the optical path of the image projected by the DMD in order to give the contrast levels which are higher than the predetermined sharp threshold, in particular for the first image 17.

The projecting and polymerizing unit 16 is configured to place the diffusing element 54 on the optical path of the image projected by the DMD in order to give the contrast levels which are lower than the predetermined blurring threshold by diffusing the image which is projected from the DMD, in particular the second image 18.

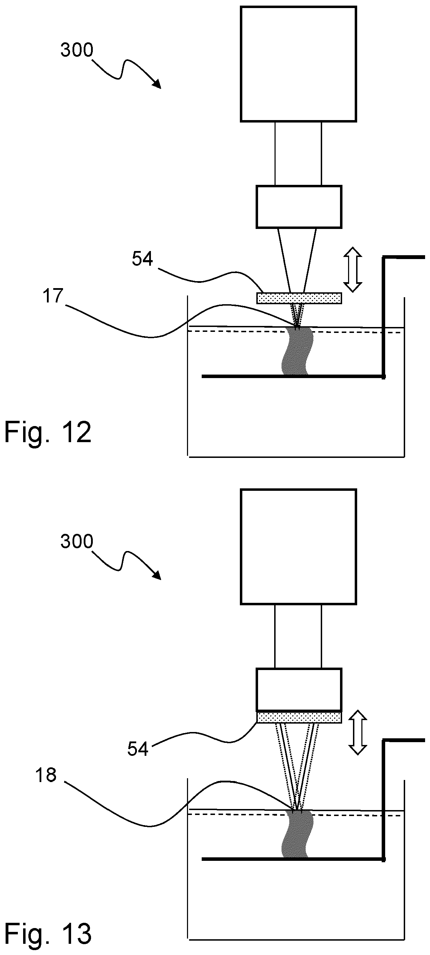

Figures 12 and 13 illustrate the manufacturing system 10 in which the projecting and polymerizing unit 16 is further configured to displace the diffusing element 54 along the optical path of the image projected by the DMD for adjusting its contrast level.

It should be noted that the manufacturing systems described with reference to Figures 8 to 13 are configured to project the first image 17 and the second image 18 sequentially.

The method may include the step, for the at least one layer such as layer 21, of forming the second part 23 with the second image 18 before forming the first part 22 with the first image 17, so that in this layer the core of the ophthalmic device is formed before the skin of the ophthalmic device.

In variants, the first image 17 and the second image 18 are projected simultaneously.

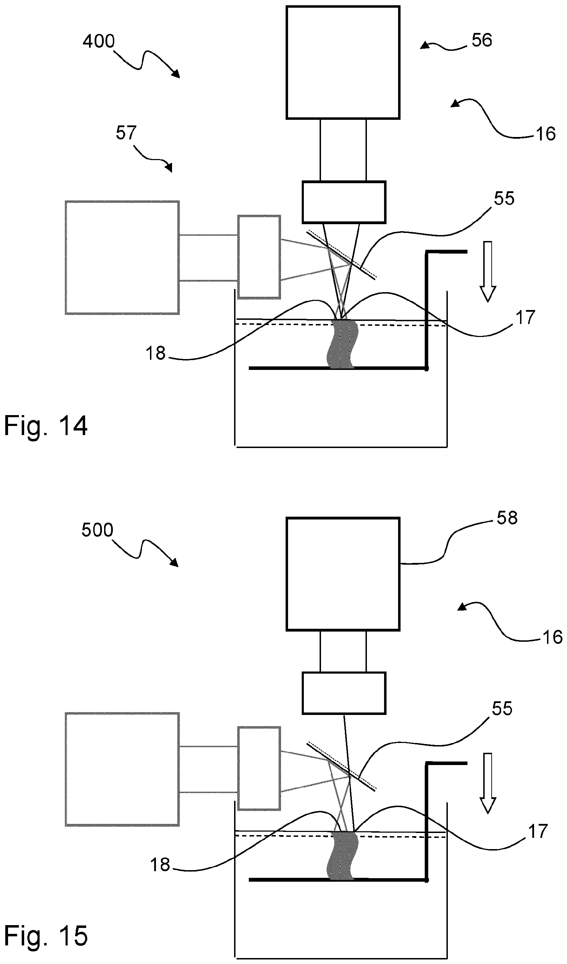

In this respect, Figure 14 illustrates the manufacturing system 10 of which the projecting and polymerizing unit 16 comprises two projecting and polymerizing assemblies each comprising a DMD and a focusing device configured as the DMD and focusing device of the unit 16 shown on Figures 8 and 9, namely a first projecting and polymerizing assembly 56 configured for generating and projecting the first image 17 and a second projecting and polymerizing assembly 57 configured for generating and projecting the second image 18, the system 10 being configured to project the first image 17 and the second image 18 simultaneously by their respective projecting and polymerizing assembly 56 and 57.

Such a manufacturing system 10 here further comprises an image directing device including a semi-reflective mirror 55, configured to direct the second image 18 generated by the projecting and polymerizing assembly 57 towards the surface 15 of the predetermined material 12.

Figure 15 illustrates the manufacturing system 10 similar to the system shown on Figure 14 except that the DMD of the assembly 56 which is configured to generate the first image 17 is replaced by a laser source 58.

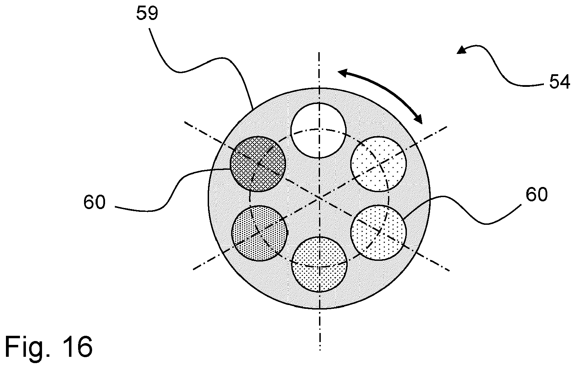

Figure 16 illustrates a particular embodiment of the diffusing element 54 suitable to be used with the manufacturing systems 10 illustrated on Figures 10 to 13.

This diffusing element 54 comprises a rotatable carrier, here a disc 59, and a plurality of diffusing filters 60, here six filters, arranged circularly on the carrier. Each filter has a respective diffusing power, from a minimum to a maximum.

The diffusing element 54 may be placed on the optical path of the image generated in the projecting and polymerizing unit 16, for instance by the DMD 52, and the additive manufacturing method may include the step of rotating the carrier for selectively placing one of the filters 60 depending on the desired level of contrast for the first image and/or the second image when projected on the surface of the predetermined material.

Variants that are not illustrated are described below.

In the process of using DMD for light-curing the resin, in a projected region of the light-curable resin, an intensity of the projected light in a portion corresponding to an area of the micromirror itself is different from that in a portion corresponding to an area between adjacent micromirrors.

This is the reason for the curve 24 and 61 in Figure 5 to show high regions formed by a succession of plateaus and valleys.

It should be noted that this is true for any kind of Spatial Light Modulator (SLM), from Electrically addressed SLM such as DMD to Optically addressed SLM such as Liquid Crystal Display (LCD). This statement can be widen to other types of projecting devices, e.g. laser scanning for which the laser spot having a Gaussian distribution will induce regions at the centre of scanning lines receiving a different intensity than the regions being in between scanning lines.

Accordingly, any of the above mentioned devices may be used for generating the at least one image to be projected in the additive manufacturing method described herein.

In the above described embodiment the step of generating and projecting the first image 17, respectively the second image 18, is a single step. In a variant, the step of generating and projecting the first image 17, respectively the second image 18, includes a plurality of steps of generating and projecting a respective portion of the first image 17, respectively the second image 18.

The blurring level of the first and second images may be characterized by comparing parameters of the first and the second image that are different from their respective energy levels as described above with reference to Figure 5. For instance a sensor may be used for acquiring the projected image and the acquired image may be treated by Fast Fourier Transform for determining first and second orders coefficients as parameters to be compared. To be noted that the resolution (pixel pitch) of the sensor must be smaller than the size of the pixels of the printed image.

It should be noted more generally that the invention is not limited to the examples described and represented.

**Claims**

**1.** A method for additively manufacturing an ophthalmic device, comprising the step of additively manufacturing a plurality of layers of a predetermined material (12) in order to obtain the ophthalmic device (20), each layer being manufactured by projecting and polymerizing at least one image on a surface (15) of a volume of the predetermined material (12); wherein, for at least one layer (21), the method comprises a step of forming a first part (22) of said layer (21) with a first image (17) having a first contrast level and a step of forming a second part (23) of said layer (21), at least partially distinct from said first part (22), with a second image (18) having a second contrast level, said first contrast level being higher than a predetermined sharp threshold and said second contrast level being lower than a predetermined blurring threshold.

2. Method according to claim 1, wherein the step of forming the first part (22) is used for forming at least partially a skin of the ophthalmic device (20) and the step of forming the second part (23) is used for forming at least partially a core of the ophthalmic device (20), said core being enveloped by the skin.

3. Method according to any one of claims 1 and 2, wherein said first image (17) and said second image (18) overlap, so that said first part (22) and said second part (23) have a shared portion.

4. Method according to any one of claims 1 to 3, wherein it further includes a step of forming at least a third part of said layer which is at least partially distinct from said first part and from said second part; said third part being formed with a third image (19) having a third contrast level which is lower than said predetermined sharp threshold and higher than said predetermined blurring threshold.

5. Method according to claim 4, wherein said third part is used for forming at least partially at least one of a skin and a core enveloped by the skin of the ophthalmic device.

6. Method according to one of claims 4 and 5, wherein said third image (19) partially overlaps at least one of said first image (17) and said second image (18), so that said third part has a shared portion with at least one of said first part and said second part.

7. Method according to any one of claims 1 to 6, wherein said images (17, 18, 19) are projected sequentially.

8. Method according to any one of claims 1 to 6, wherein said images (17, 18, 19) are projected simultaneously.

9. Method according to any one of claims 1 to 8, wherein it comprises a step of forming at least one of said images by using at least one digital micromirror device (52) of at least one projecting and polymerizing unit (16).

10. Method according to any one of claims 1 to 9, wherein it comprises a step of determining said predetermined sharp threshold and said predetermined blurring threshold depending on the composition and/or the intrinsic parameters of said predetermined material (12).

11. Method according to any one of claims 1 to 10, wherein said second contrast level is obtained by blurring said second image (18), for instance by defocusing or by diffusing said second image (18).

12. A manufacturing system (10) configured to carry out a method for additively manufacturing an ophthalmic device (20) layer by layer, comprising a unit (16) for projecting and polymerizing at least one image on a surface of a volume of a predetermined material for forming each layer of the ophthalmic device; said projecting and polymerizing unit (16) being configured to generate a first image (17) having a first contrast level which is higher than a predetermined sharp threshold and to project said first image (17) on a surface (15) of said volume of said predetermined material (12) to form a first part (22) of the layer (21), and to generate a second image (18) having a second contrast level which is lower than a predetermined blurring threshold and to project said second image (18) on a surface (15) of said volume of said predetermined material (12) to form a second part (23) of the layer (21) which is at least partially distinct from the first part (22).

13. Manufacturing system according to claim 12, wherein said projecting and polymerizing unit (16) is configured to generate a third image (19) having a third contrast level which is lower than said predetermined sharp threshold and higher than said predetermined blurring threshold, and to project said third image (19) on a surface (15) of said volume of said predetermined material (12) to form a third part of the layer which is at least partially distinct from said first part and from said second part.

14. Manufacturing system according to any one of claims 12 or 13, wherein said projecting and polymerizing unit (16)

is configured to give said contrast levels which are lower than said predetermined blurring threshold to said second image (18) by defocusing said second image (18).

15. Manufacturing system according to one of claims 12 or 13, wherein said projecting and polymerizing unit (16) is configured to give said contrast levels which are lower than said predetermined blurring threshold to said second image (18) by diffusing said second image (18).

10

16

17

15

14

11

20

12

21

13

Fig. 1

17

44

45

Fig. 2

18

46

Fig. 3

Fig. 4

Fig. 5

**Fig. 6**

**Fig. 7**

Fig. 8

Fig. 9

200

16

54

17

Fig. 10

200

16

54

18

Fig. 11

**300**

**54**

**17**

Fig. 12

**300**

**54**

**18**

Fig. 13

Fig. 14

Fig. 15

Fig. 16

Europäisches
Patentamt

European
Patent Office

Office européen
des brevets

# EUROPEAN SEARCH REPORT

Application Number

EP 21 30 5972

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/260306 A1 (ESSILOR INT [FR]) 30 December 2020 (2020-12-30) | 12-15 | INV. B29C64/124 |
| A | * claim 1 *<br>* figures 2, 3A, 3B, 10 *<br>* page 12, lines 24-27 *<br>* page 13, lines 8-15 *<br>* page 27, lines 17-19 *<br>----- | 1-11 | B29C64/277<br>B33Y10/00<br>B33Y30/00<br>B29D11/00 |
| X | US 2018/086003 A1 (GREENE RICHARD M [US] ET AL) 29 March 2018 (2018-03-29) | 12-15 | |
| A | * claims 1, 4, 7 *<br>* figures 1, 2A-2D *<br>* paragraphs [0022], [0050] *<br>----- | 1-11 | |

TECHNICAL FIELDS
SEARCHED      (IPC)

B29C
B33Y
B29D

The present search report has been drawn up for all claims

| Place of search | Date of completion of the search | Examiner |
|---|---|---|
| The Hague | 14 December 2021 | Schmitt, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................................
& : member of the same patent family, corresponding document

EPO FORM 1503 03.82 (P04C01)

EP 4 119 329 A1

## ANNEX TO THE EUROPEAN SEARCH REPORT
## ON EUROPEAN PATENT APPLICATION NO.

EP 21 30 5972

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2021

| Patent document cited in search report | Publication date | Patent family member(s) | Publication date |
|---|---|---|---|
| WO 2020260306 A1 | 30-12-2020 | NONE | |
| US 2018086003 A1 | 29-03-2018 | NONE | |

EPO FORM P0459

For more details about this annex : see Official Journal of the European Patent Office, No. 12/82

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018235209 A1